# EUROPEAN PATENT APPLICATION

(11) **EP 4 572 411 A1**
(43) Date of publication of application: **18.06.2025**
(21) Application number: 23877674.4
(22) Date of filing: 11.10.2023
(51) Int. Cl.: H04W 48/16, H04W 4/80, H04W 52/02, H04W 56/00, H04W 76/14, H04W 84/12

(54) **METHOD AND DEVICE FOR DISCOVERY AND DATA COMMUNICATION IN WIRELESS COMMUNICATION SYSTEM**

(30) Priority: 11.10.2022 KR 20220129878
(71) Applicant: Samsung Electronics Co., Ltd., Suwon-si, Gyeonggi-do 16677 (KR)
(72) Inventor: OH, Hyunseob, Suwon-si Gyeonggi-do 16677 (KR); SEO, Seungbeom, Suwon-si Gyeonggi-do 16677 (KR); CHOI, Junyoung, Suwon-si Gyeonggi-do 16677 (KR); JUN, Haeyoung, Suwon-si Gyeonggi-do 16677 (KR); HAN, Sehee, Suwon-si Gyeonggi-do 16677 (KR)
(74) Representative: Nederlandsch Octrooibureau
(86) International application number: PCT/KR2023/015641
(87) International publication number: WO 2024/080750

(57) **Abstract**

A method performed by a first electronic device in a wireless communication system, according to the present disclosure, may comprises the steps of: identifying scheduling information; on the basis of the scheduling information, transmitting service discovery frames during a first period; identifying at least one second electronic device; on the basis of the scheduling information, transmitting synchronization beacons to the at least one second electronic device during a second period after the first period; and on the basis of the scheduling information, performing communication with the at least one second electronic device.

## Description

### [Technical Field]

The disclosure provides a method and a device for performing short-range communication in neighboring awareness networking (NAN) or Wi-Fi Aware specifications in a wireless communication system.

### [Background Art]

As electronic devices equipped with independent operating systems are rapidly proliferating, various communication platforms are proposed to support the multifunctional operation of electronic devices. For example, the proximity services of the neighboring awareness networking (NAN) specification or Wi-Fi Aware specification, which are based on short-range wireless communication technology, support low-power and high-speed data transmission and reception between adjacent electronic devices. The proximity service of the NAN specification may configure a set of electronic devices called a cluster. Among short-range communication networks, a NAN protocol based on the neighboring awareness networking (NAN) specification is a protocol that synchronizes a time when messages are transmitted or received between electronic devices and other electronic devices. In recent Wi-Fi specifications, discovery technology based on neighboring awareness networking (NAN) is being developed, and the development of proximity services using this technology is actively underway.

### [Detailed Description of the Invention]

### [Technical Problem]

In the past, the time required to perform device and service discovery via short-range wireless communication has been determined, and thus delays often occur.

Therefore, a method for reducing the execution time of device and service discovery and for flexibly performing communication scheduling is proposed.

According to the disclosure, a method for measuring channel quality in device-to-device communication is proposed.

### [Technical Solution]

A method according to an embodiment of the disclosure is a method performed by a first electronic device in a wireless communication system, and the method may include identifying scheduling information, transmitting, based on the scheduling information, a service discovery frame during a first period, identifying at least one second electronic device, transmitting, based on the scheduling information, a synchronization beacon to the at least one second electronic device during a second period after the first period, and performing, based on the scheduling information, communication with the at least one second electronic device.

A first electronic device according to an embodiment of the disclosure may include a transceiver; and at least one processor electrically connected to the transceiver, wherein the at least one processor is configured to identify scheduling information, transmit, based on the scheduling information, a service discovery frame during a first period, identify at least one second electronic device, transmit, based on the scheduling information, a synchronization beacon to the at least one second electronic device during a second period after the first period, and perform, based on the scheduling information, communication with the at least one second electronic device.

### [Advantageous Effects]

In the disclosure, a method is proposed to reduce the execution time of device and service discovery and to flexibly perform communication scheduling.

### [Brief Description of Drawings]

FIG. 1 is a block diagram of an electronic device in a network environment according to an embodiment of the disclosure.
FIG. 2 illustrates an example of a time clock of an electronic device;
FIG. 3 illustrates a cluster and various electronic devices included in the cluster according to an embodiment;
FIG. 4A illustrates a state transition pattern of an electronic device according to various embodiments of this application; FIG. 4B illustrates scheduling of an electronic device according to various embodiments of this application;
FIG. 5 illustrates a time clock of an electronic device according to various embodiments of the disclosure;
FIG. 6 is a flowchart illustrating communication performed between a plurality of nodes according to various embodiments of the disclosure;
FIG. 7 is a flowchart illustrating a method of identifying channel quality between a plurality of nodes according to various embodiments of the disclosure;
FIG. 8 is a flowchart illustrating communication performed between a plurality of nodes according to various embodiments of the disclosure;
FIG. 9 is a flowchart illustrating a first method of allocating channel information and scheduling information according to priority according to various embodiments of the disclosure;
FIG. 10 is a flowchart illustrating a second method of allocating channel information and scheduling information according to priority according to various embodiments of the disclosure; and
FIG. 11 illustrates the structure of an electronic device according to embodiments of the disclosure.

### [Mode for Carrying out the Invention]

Hereinafter, embodiments of the disclosure will be described in detail in conjunction with the accompanying drawings.

In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description, some of terms and names defined in the WiFi-aware-based communication standards may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

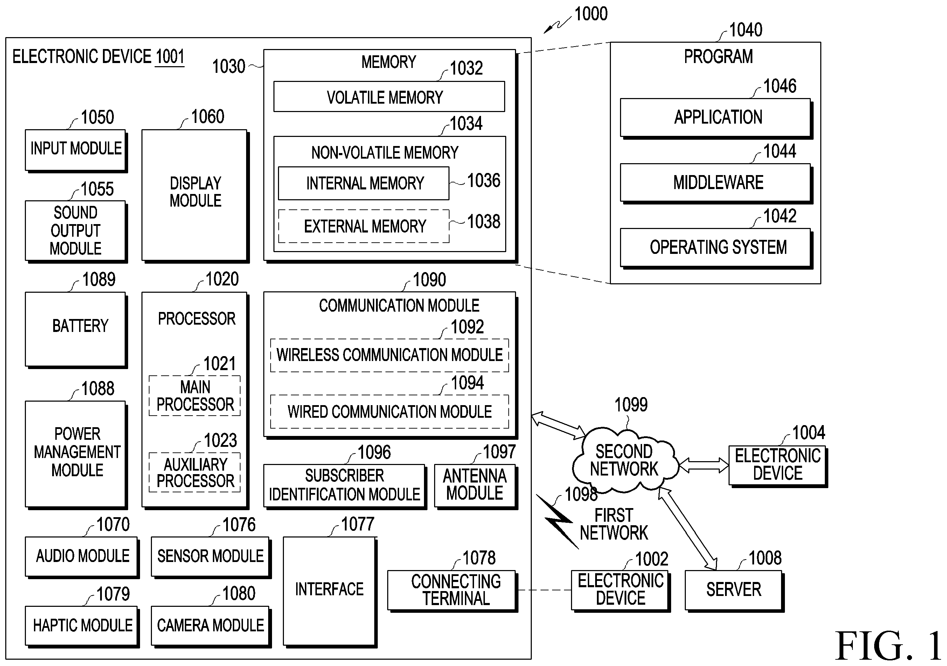

FIG. 1 is a block diagram of an electronic device in a network environment according to an embodiment of the disclosure. Referring to FIG. 1 the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 104 may be a device of a same type as, or a different type, from the electronic device 1001. According to an embodiment, all or some of operations to be executed at the electronic device 1001 may be executed at one or more of the external electronic devices 1002, 104, or 108. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

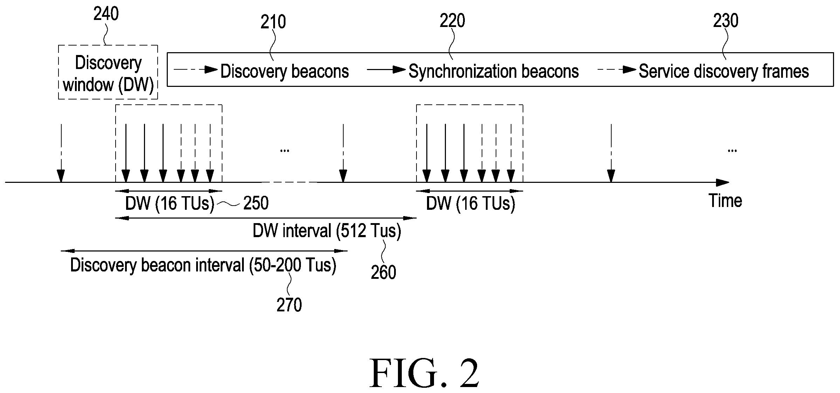

FIG. 2 illustrates an example of a time clock of an electronic device.

Referring to FIG. 2, at least one electronic device included in a cluster (e.g., the electronic device 1000 of FIG. 1) may transmit a discovery beacon 210 according to the NAN specification. The at least one electronic device may occupy 16 time units (TUs) according to the NAN specification, and may transmit a synchronization beacon 220 and a service discovery frame 230 within a synchronized communication section 240 (e.g., discovery window (DW)) that exists at intervals of 512 time units (DW interval).

In an embodiment, the synchronization beacon 220 may be a signal for maintaining synchronization (e.g., time clock synchronization) between electronic devices included in a cluster. The synchronization beacon 220 may include at least one piece of information related to synchronization between electronic devices. For example, the synchronization beacon 220 may include at least one of a frame control (FC) field indicating a function of a signal (e.g., beacon), a broadcast address, a media access control (MAC) address of the electronic device from which the synchronization beacon 220 has been transmitted, a cluster identifier, a sequence control field, a time stamp for a beacon frame, a beacon interval field indicating the interval between start points of the synchronized communication sections, or capability information of the electronic device that has transmitted the synchronization beacon 220. Alternatively, the synchronization beacon 220 may include an information element related to at least one proximity network and may include, for example, service-related content that may be provided based on a proximity network. According to the NAN specification, the synchronization beacon 220 may be transmitted by an electronic device defined as an anchor master device, a master device, or a non-master sync device among at least one electronic device in the cluster.

In an embodiment, the service discovery frame 230 may be a signal for advertising a service between one or more electronic devices in a cluster and exchanging information related to the service, based on a proximity network. According to the NAN specification, the service discovery frame 230 is a vendor-specific public action frame and may include various fields. For example, the service discovery frame 230 may include an information element related to at least one proximity network.

In an embodiment, at least one electronic device may transmit a discovery beacon 210 within a section other than the DW section 240. The discovery beacon 210 may be a cluster advertising function signal transmitted to enable at least one other electronic device not participating in the cluster to discover the cluster. For example, the at least one other electronic device that does not participate in the cluster may, by performing a passive scan, detect the discovery beacon 210 transmitted by the at least one electronic device that participates in the cluster, thereby discovering and participating in the cluster. In this regard, the discovery beacon 210 may include at least one piece of information for synchronizing with the cluster. For example, the discovery beacon 210 may include at least one of a frame control (FC) field indicating the function of the signal (e.g., beacon), a broadcast address, a media access control (MAC) address of the electronic device from which the discovery beacon 210 has been transmitted, a cluster identifier, a sequence control field, a time stamp for the beacon frame, a discovery beacon interval field indicating the transmission interval of the discovery beacon 210, or capability information of the electronic device that has transmitted the discovery beacon 210. Alternatively, the discovery beacon 210 may include an information element related to at least one proximity network.

In an embodiment, the discovery window 240 may occupy 16 TUs, and a DW interval 260, which is the time interval between the discovery windows 240, may occupy 512 TUs. In addition, a discovery beacon interval 270 indicating the transmission interval of the discovery beacon 210 may occupy 50 to 200 TUs. The time for the electronic device to perform discovery may depend on the DW interval 260. Therefore, when performing a discovery operation between electronic devices, the next discovery operation may not be performed until the time of 512 TUs of the DW interval 260 has elapsed, resulting in a time delay, and a method for shortening this delay is required.

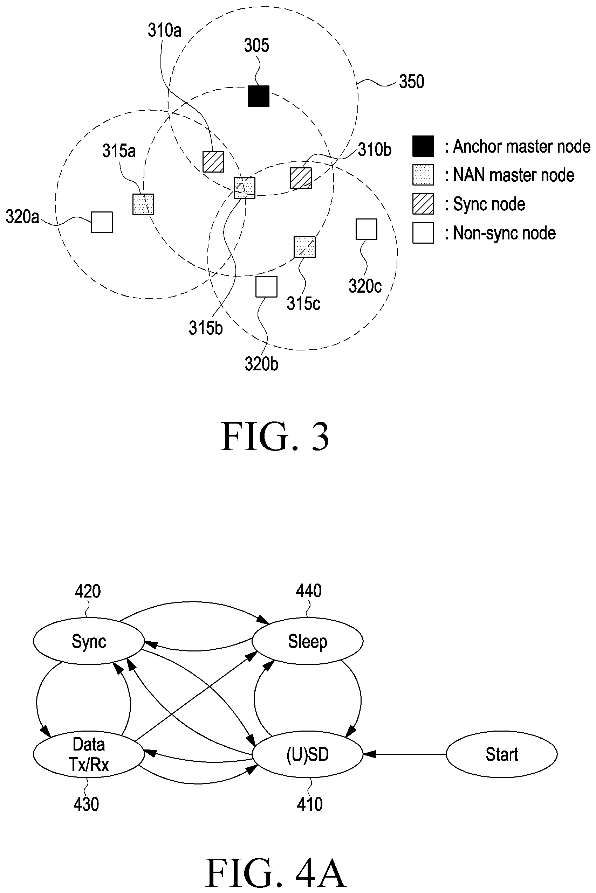

FIG. 3 illustrates a cluster and various electronic devices included in the cluster according to an embodiment. Each of nodes in FIG. 3 may be the same as the electronic devices of FIGS. 1 and 2.

Referring to FIG. 3, the electronic device may be divided into an anchor master node 305, a NAN master node 315a, 315b, or 315c, a sink node 310a or 310b, and a non-sink node 320a, 320b, or 320c.

According to an embodiment, the anchor master node 305, which is the highest layer, may communicate with the sink node 310a or 310b and the NAN master node 315b within the coverage through the discovery method of FIG. 2. However, there are restrictions on communication with the remaining nodes outside the coverage. Therefore, in order for the anchor master node 305 to communicate with nodes outside the coverage, it may be possible to make a connection through a hop via a connection with another master node. However, if the connection is made through a hop, communication may be restricted and there is a high probability that delays will occur.

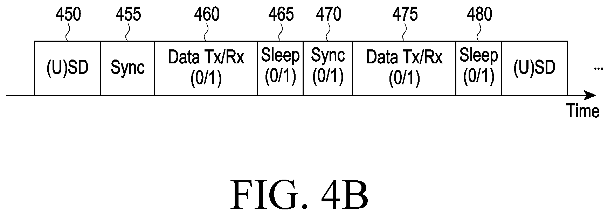

FIG. 4A illustrates a state transition pattern of an electronic device according to various embodiments of this application. FIG. 4B illustrates scheduling of an electronic device according to various embodiments of this application. The electronic devices of FIGS. 4A and 4B may be the same as the electronic devices of FIGS. 1 to 3. The electronic devices of FIGS. 4A and 4B may be nodes capable of transmitting discovery beacons and synchronization beacons.

Referring to FIG. 4A, the electronic device may perform a discovery operation in an (unsynchronized) service discovery (hereinafter (U)SD) state 410. When performing only an SD operation, the electronic device needs to transmit a sync beacon (or synchronization beacon), and when performing a USD operation, the electronic device may not transmit the sync beacon as required. According to an embodiment of the disclosure, when performing discovery to perform communication between electronic devices within the coverage, synchronization may not be necessary, and in this situation, the electronic device may perform a USD operation. According to an embodiment, when performing a (U)SD operation, the electronic device may configure a (U)SD period and transmit a service discovery frame (SDF).

According to an embodiment, an electronic device that has performed the (U)SD operation may, when synchronization is required, transition to a sync state 420 of transmitting a sync beacon. When transitioning to the sync state 420, the electronic device may transmit a sync beacon during a sync period. However, when synchronization is not required, the electronic device may transition to a data transmission/reception state 430 without transmitting the sync beacon. In addition, when data transmission/reception is not required, the electronic device may immediately transition to a sleep state 440. An electronic device that has transitioned to the data communication state 430 may transmit/receive data to/from other electronic devices in the cluster. According to an embodiment, the (U)SD state 410, the sync state 420, the data transmission/reception state 430, and the sleep state 440 may be transitioned between each other, and may be determined depending on the scheduling configuration of the electronic device.

Referring to FIG. 4B, an example of scheduling of an electronic device according to an embodiment is shown. An electronic device may transmit a signal including scheduling configuration information to another electronic device. The electronic device may discover another device by performing a discovery operation in the (U)SD state (indicated by reference numeral 450). After performing the discovery operation, the electronic device may transmit a sync beacon for synchronization (indicated by reference numeral 455). The electronic device that has performed synchronization may transmit/receive data to/from another device according to the scheduling configuration included in the configuration information (indicated by reference numeral 460). After transmitting/receiving data, the electronic device may enter a sleep state according to the scheduling configuration included in the configuration information (indicated by reference numeral 465). The configuration information may be expressed as 1 bit. For example, if it is 0, data transmission/reception may be performed, and if it is 1, data transmission/reception may not be performed.

According to an embodiment, the electronic device performs the (U)SD operation, and may freely perform a sync operation 470, a data transmission/reception operation 475, and a sleep operation 480 according to scheduling configuration before performing the next (U)SD operation. Each of the operations may be performed in any order and may be performed according to the scheduling configuration information. In existing operations, only predetermined operations could be performed during a predetermined period of time, resulting in a large waste of resources. However, the method according to the disclosure enables various operations to be performed according to a scheduling method within a predetermined period of time, thereby enabling efficient use of resources.

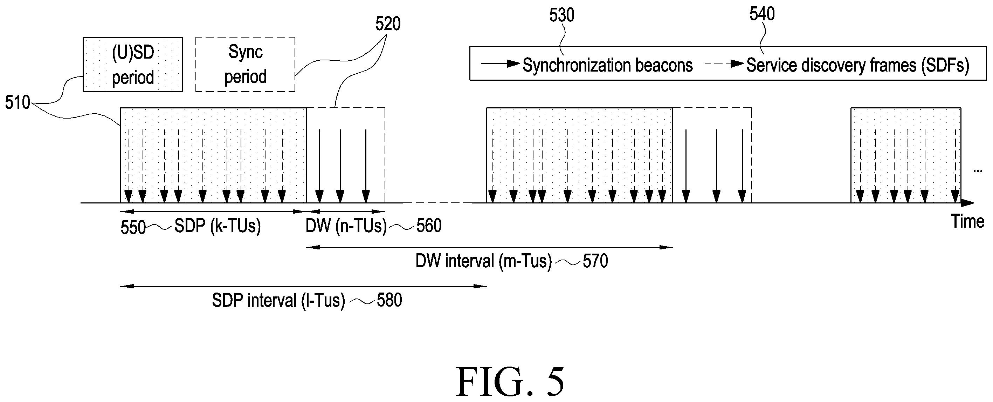

FIG. 5 illustrates a time clock of an electronic device according to various embodiments of the disclosure. The electronic device of FIG. 5 is the electronic device of FIGS. 1 to 4B and may be a master node or a non-master node.

Referring to FIG. 5, the electronic device may transmit/receive at least one service discovery frame (SDF) 540 in a (U)SD period (SDP) 510. In the (U)SD period 510, the electronic device may be in the (U)SD state of FIGS. 4A and 4B. The SDP 510 may occupy k-TUs according to the configuration of the electronic device (indicated by reference numeral 550). The value of k is not fixed and may vary depending on the configuration.

The electronic device may transmit/receive at least one sync beacon 530 in a sync period (or DW) 520 after the SDP 510. The DW 520 may occupy n-TUs according to the configuration of the electronic device (indicated by reference numeral 560). The value of n is not fixed and may vary depending on the configuration. For example, the value of n may be configured as a value less than 16.

According to an embodiment, a DW interval 570 may be configured between the sync period 520 and the sync period and m-TUs may be occupied according to the configuration of the electronic device. The value of m is not fixed and may vary depending on the configuration. For example, the value of m may be configured as a value less than 512.

According to an embodiment, the interval between the SDP 510 and the SDP may be configured as an SDP interval 580, and l-TUs may be occupied depending on the configuration of the electronic device. The value of l is not fixed and may change depending on the configuration. For example, the value of l may be configured as a value between 50 and less than 200.

According to an embodiment, the values of k, n, m, and l of FIG. 5 may be included in the scheduling information as the values of the period information.

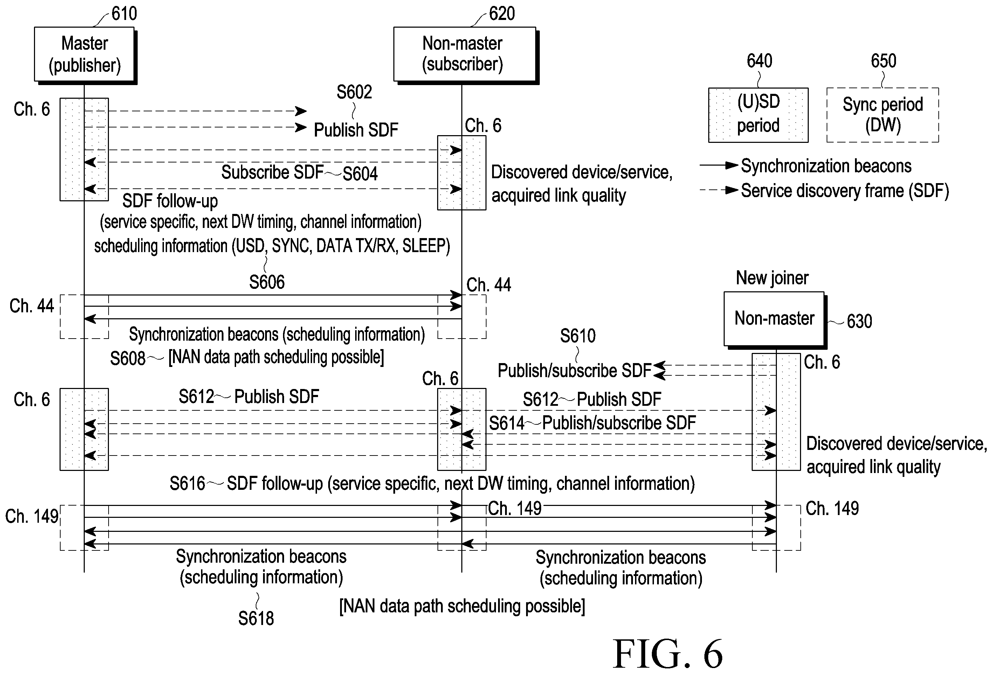

FIG. 6 is a flowchart illustrating communication performed between a plurality of nodes according to various embodiments of the disclosure. FIG. 6 is a signal flow diagram showing a series of operations in which a plurality of electronic devices perform communication to configure a cluster. In FIG. 6, three electronic devices are included, but the cluster is not limited to this and may configure a cluster with a plurality of electronic devices. The electronic device in FIG. 6 may be a master node (or publisher) or a non-master node (or subscriber).

Referring to FIG. 6, a master node 610 may start a NAN service. The master node 610 may transmit a publish SDF to a non-master node 620 that is not included in a cluster in a (U)SDP 640 (S602). The publish SDF may include device information (such as device name, ID, or phone number information) or user information (such as a user's name, profile information, or account information). For example, the SDP may be performed on channel 6. Upon receiving the publish SDF, the non-master node 620 may transmit a subscribe SDF to the master node 610 on the same channel (S604). Upon receiving the subscribe SDF, the master node 610 may perform an SDF follow-up with the non-master node 620 (S606). While the SDF follow-up is performed, the master node 610 and the non-master node 620 may transmit/receive service-specific information, SDP or DW timing information (to be performed next), channel information, vendor information, capability information of electronic devices, and scheduling information (e.g., configuration information or period information in FIGS. 4A to 5).

The master node 610 having completed service discovery may transmit/receive a sync beacon to/from the non-master node 620 in a sync period (DW) 650 (S608). For example, the DW may be performed on channel 44. The sync beacon may include scheduling information, information related to services or data to be transmitted in the future (e.g., application information, service state information), NAN capability information, and capability information of NAN data path scheduling. According to an embodiment, information transmitted/received in the SDF follow-up may also be included in the sync beacon and vice versa.

The master node 610 may continuously transmit/receive the SDF and the sync beacon while configuring a cluster and performing communication with the non-master node 620. Thereafter, a new non-master node 630 that does not configure a cluster may, while searching for a channel, listen to a channel through which the master node 610 and the non-master node 620 perform communication. For example, while the master node 610 and the non-master node 620 are performing the (U)SD through channel 6, the new non-master node 630 may listen to channel 6. The new non-master node 630 may transmit a publish SDF or a subscribe SDF to join the cluster (S610). According to another embodiment, the new non-master node 630 may receive the publish SDF transmitted by the master node 610 (S612). When the new non-master node 630 has transmitted the publish SDF in operation S610, the subscribe SDF may be received from the non-master node 620 and the master node 610, and when the publish SDF is received in operation S612, the subscribe SDF may be transmitted to the non-master node 620 and the master node 610. The new non-master node 630 may perform SDF follow-up with the master node 610 and the non-master node 620 (S616). While the SDF follow-up is performed, the master node 610, the non-master node 620, and the new non-master node 630 may transmit/receive service-specific information, SDP or DW timing information, channel information, channel quality information, vendor information, capability information of electronic devices, and scheduling information (e.g., the configuration information or time period information in FIGS. 4A to 5), which are the same information as in operation S606.

When the SDP is terminated, the new non-master node 630 may transmit/receive the sync beacon to proceed with a DW (S618). The sync beacon may include the same information as in operation S608.

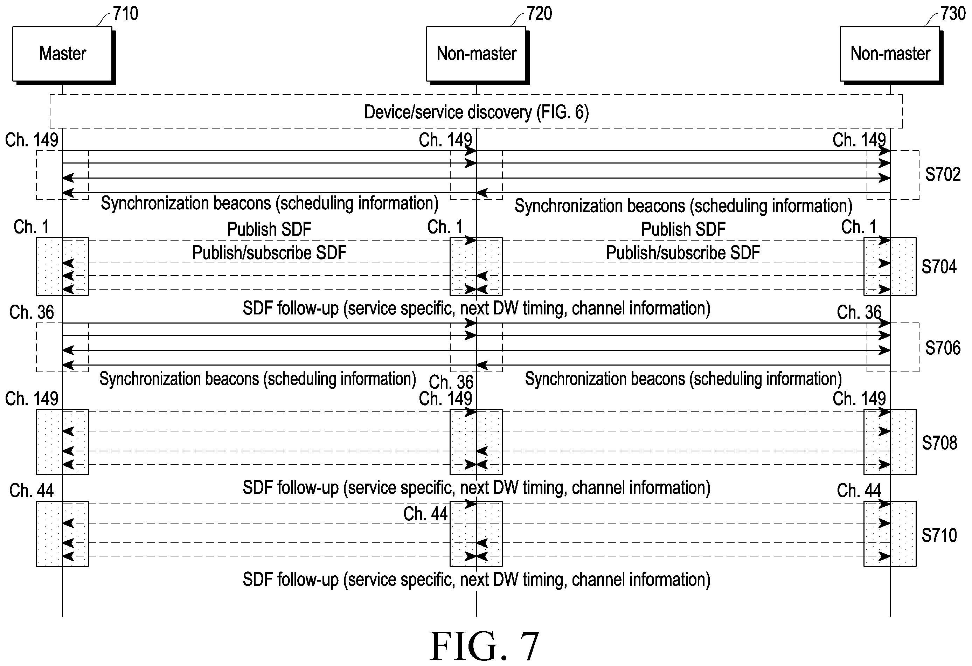

FIG. 7 is a flowchart illustrating a method of identifying channel quality between a plurality of nodes according to various embodiments of the disclosure. FIG. 7 may illustrate that a plurality of electronic devices perform communication by changing channels according to channel quality within a cluster. The electronic device of FIG. 7 may be the same as the electronic device of FIGS. 1 to 6.

FIG. 7 may illustrate a state in which device and service discovery are completed according to the series of operations of FIG. 6 so that a cluster including the master node 710, the first non-master node 720, and the second non-master node 730 is configured.

The master node 710, the first non-master node 720, and the second non-master node 730 may communicate a sync beacon during a DW (S702). The sync beacon in operation S702 may be performed on channel 149, for example. The sync beacon may include service-specific information, SDP or DW timing information, channel information, channel quality information, vendor information, capability information of the electronic device, scheduling information, and NAN availability. The master node 710, the first non-master node 720, and the second non-master node 730 may acquire the quality of the currently communicating channel (channel 149) while transmitting/receiving a sync beacon.

The master node 710, the first non-master node 720, and the second non-master node 730 may communicate various SDFs during SDP (S704). The SDF in operation S704 may be performed on channel 1, for example. The master node 710, the first non-master node 720, and the second non-master node 730 may obtain quality of the currently communicating channel (channel 1) while transmitting/receiving SDFs such as publish SDF, subscribe SDF, and SDF follow-up. When communicating the SDF, service-specific information, SDP or DW timing information, channel information, channel quality information, vendor information, capability information of electronic devices, scheduling information, and NAN availability information may be transmitted/received.

Thereafter, the master node 710, the first non-master node 720, and the second non-master node 730 may communicate the sync beacon again during the next DW (S706). The sync beacon in operation S706 may be performed on a changed channel, for example, channel 36, which is different from the previous channel. The sync beacon may include service-specific information, SDP or DW timing information, channel information, channel quality information, vendor information, capability information of electronic devices, scheduling information, and NAN capability information. The master node 710, the first non-master node 720, and the second non-master node 730 may acquire the quality of the currently communicating channel (channel 36) while transmitting/receiving the sync beacon.

Thereafter, the master node 710, the first non-master node 720, and the second non-master node 730 may perform additional SDP (S708, S710), perform SDF communication during SDP, and measure the quality of the currently communicating channel. When the channel for SDP communication is changed, the SDP may be performed continuously without proceeding with a DW.

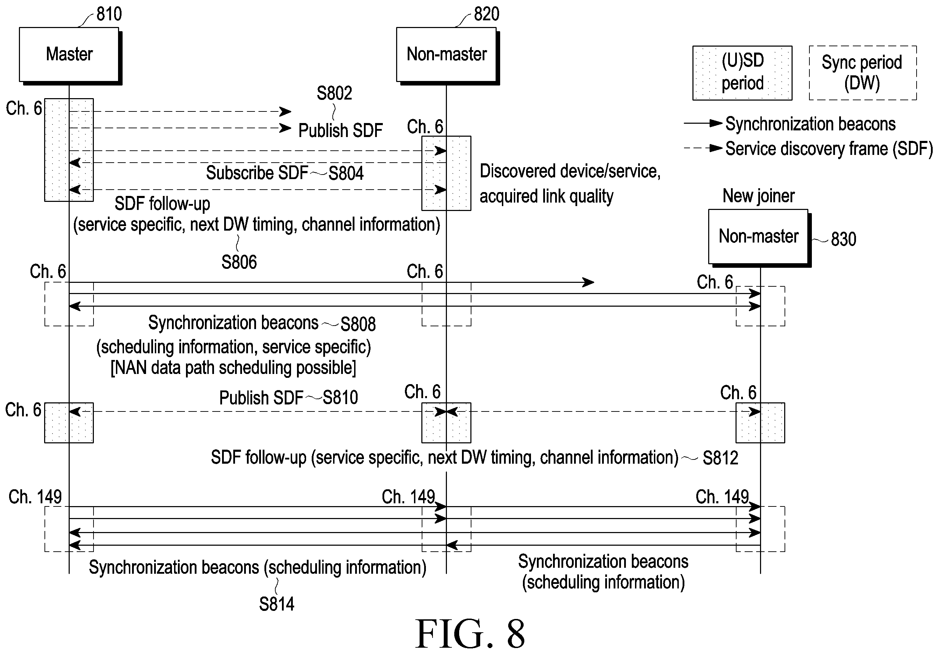

FIG. 8 is a flowchart illustrating communication performed between a plurality of nodes according to various embodiments of the disclosure. FIG. 8 is a signal flow diagram illustrating a series of operations in which a plurality of electronic devices perform communication to configure a cluster.

Referring to FIG. 8, a master node 810 may transmit a publish SDF to a first non-master node 820 that is not included in a cluster in a (U)SDP (S802). The publish SDF may include device information (such as device name, ID, or phone number information) or user information (such as a user's name, profile information, or account information). For example, the SDP may be performed on channel 6. Upon receiving the publish SDF, the first non-master node 820 may transmit a subscribe SDF to the master node 810 on the same channel (S804). Upon receiving the subscribe SDF, the master node 810 may perform SDF follow-up with the first non-master node 820 (S806). While the SDF follow-up is performed, the master node 810 and the first non-master node 820 may transmit/receive service-specific information, SDP or DW timing information (to be performed next), channel information, channel quality information, vendor information, capability information of electronic devices, and scheduling information (e.g., configuration information or period information in FIGS. 4A to 5).

After completing the service discovery, the master node 810 may communicate a sync beacon with the first non-master node 820 and a second non-master node 830 in the sync period (DW) (S808). For example, the DW may be performed on channel 6. The sync beacon may include scheduling information, information related to services or data to be transmitted in the future (e.g., application information, service state information), service-specific information, and vendor-specific information. According to an embodiment, information transmitted/received in the SDF follow-up may also be included in the sync beacon and vice versa.

The master node 810 may continuously transmit/receive the SDF and the sync beacon while performing communication with the first non-master node 820 and the second non-master node 830 after configuring a cluster including them. Here, the second non-master node 830 that does not configure the cluster may listen to a channel through which the sync beacons of the first non-master node 820 and the master node 810 are communicated while searching for a channel. For example, while the master node 810 and the first non-master node 820 perform the DW through channel 6, the second non-master node 830 may listen to channel 6. The second non-master node 830 may receive the sync beacon.

According to an embodiment, the master node 810 may identify the vendor and service for each electronic device, based on vendor-specific information and service-specific information of the first non-master node 820 and the second non-master node 830. For example, the vendor-specific information may include a vendor identifier (ID), vendor-specific account information, etc. The service-specific information may include service type information, information about whether data is being transmitted, etc. The second non-master node 830 may receive the publish SDF transmitted by the master node 810 or the first non-master node 820 (S810). Thereafter, in the next SDP, the second non-master node 830 may perform SDF follow-up with the master node 810 and the first non-master node 820 (S812). In the next SDP, the master node 810 may identify the identified vendors and services of the first non-master node 820 and the second non-master node 830, and transmit vendor-specific or service-specific channel information and scheduling information, respectively. (S812). The channel information may include information about which channel is to be used. The scheduling information may include size information of the SDP, DW, DW interval, and SDP interval described in FIG. 5. While the SDF follow-up is performed, the master node 810, the first non-master node 820, and the second non-master node 830 may transmit/receive service information, service-specific information, SDP or DW timing information, channel information, channel quality information, vendor information, capability information of electronic devices, and scheduling information. Thereafter, in the next DW, the master node 810, the first non-master node 820, and the second non-master node 830 may communicate a sync beacon (S814). The master node 810 may transmit specific information depending on the identified vendors and services of the non-master nodes. The sync beacon may include service-specific information, SDP or DW timing information, channel information, channel quality information, vendor information, capability information of electronic devices, scheduling information, and NAN capability information.

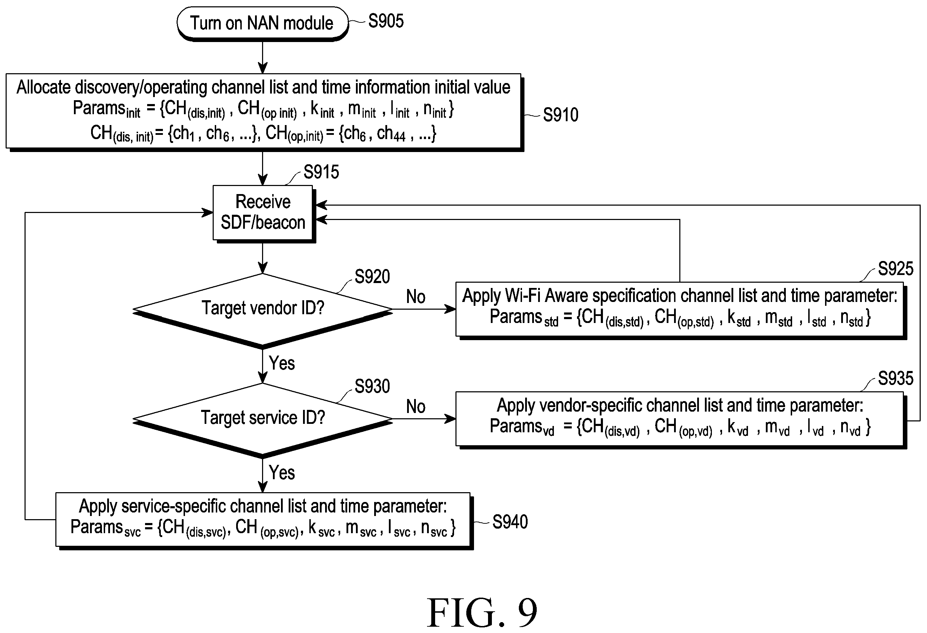

FIG. 9 is a flowchart illustrating a first method of allocating channel information and scheduling information according to priority according to various embodiments of the disclosure. FIG. 9 proposes a method of applying different channel and scheduling information according to the vendor and service type as priority. The electronic device of FIG. 9 may be the electronic device (master node or non-master node) of FIGS. 1 to 8.

Referring to FIG. 9, the electronic device may turn on a NAN module to perform short-range communication with another electronic device (S905). The electronic device may assign initial values for scheduling parameters and a discovery/operating channel list required when performing NAN (S910). The scheduling parameters may include scheduling information and channel information of FIGS. 5 to 8. For example, the discovery/operating channel list of scheduling information may include information about channels available as discovery channel information and operating channel information. Initial discovery channel information may be expressed as CH_{(dis, init)}. Initial operating channel information may be expressed as CH_{(op, init)}. The scheduling information may include k, m, l, and n values as size information for the SDP, DW, DW interval, and SDP interval described in FIG. 5. Initial scheduling information may include kᵢₙᵢₜ, mᵢₙᵢₜ, lᵢₙᵢₜ, and nᵢₙᵢₜ values.

After assigning the initial values of the discovery/operating channel list and scheduling parameters, the electronic device may transmit/receive the SDF and the sync beacon to/from at least one other electronic device through the SDP and DW (S915). The SDF and sync beacon may include service-specific information, SDP or DW timing information, channel information, channel quality information, vendor information, capability information of electronic devices, scheduling information, and NAN capability information.

The electronic device may identify vendor information of another electronic device from the received SDF and sync beacon (S920). The vendor information may include a vendor identifier (ID) or account information. For example, when another electronic device contains a Samsung account, it may be identified as a target vendor. When it is identified that the identified vendor information is not the target vendor, the electronic device may apply the channel list and scheduling parameter information determined in accordance with the Wi-Fi Aware specification (S925). The channel list and scheduling parameter information according to the Wi-Fi Aware specification may be conventionally used information or channel list and scheduling parameter information assigned as initial values in operation S9010. The channel list according to the Wi-Fi Aware specification may be expressed as CH_{(dis, std)} and CH_{(op, std)}. The scheduling parameter information according to the Wi-Fi Aware specification may be expressed as k_{std}, m_{std}, l_{std}, and n_{std}.

When the identified vendor information is identified as the target vendor, the electronic device may identify the service ID of another electronic device from the received service-specific information (S930). When the identified service ID is identified as a target service, service-specific channel list and scheduling parameter information may be applied (S940). The service-specific channel list and scheduling parameter information include the most appropriate channel to provide the corresponding service and may include scheduling information. The service-specific channel list may be expressed as CH_{(dis, svc)} and CH_{(op, svc)}. The service-specific scheduling parameter information may be expressed as k_{svc}, m_{svc}, l_{svc}, and n_{svc}.

When it is identified that the identified service ID is not the target service, the electronic device may apply vendor-specific channel list and scheduling parameter information (S935). The vendor-specific channel list and scheduling parameter information may be applied to take advantage of special functions provided only by the corresponding vendor. The vendor-specific channel list may be expressed as CH_{(dis, vd)} and CH_{(op, vd)}. The vendor-specific scheduling parameter information may be expressed as k_{vd}, m_{vd}, l_{vd}, and n_{vd}.

According to an embodiment, the electronic device may pre-store the channel list and scheduling parameter information determined according to Wi-Fi Aware specifications, the service-specific channel list and scheduling parameter information, and the vendor-specific channel list and scheduling parameter information. Alternatively, the electronic device may transmit/receive the channel list and scheduling parameter information determined according to Wi-Fi Aware specifications, the service-specific channel list and scheduling parameter information, and the vendor-specific channel list and scheduling parameter information to/from other electronic devices through the SDF and the sync beacon.

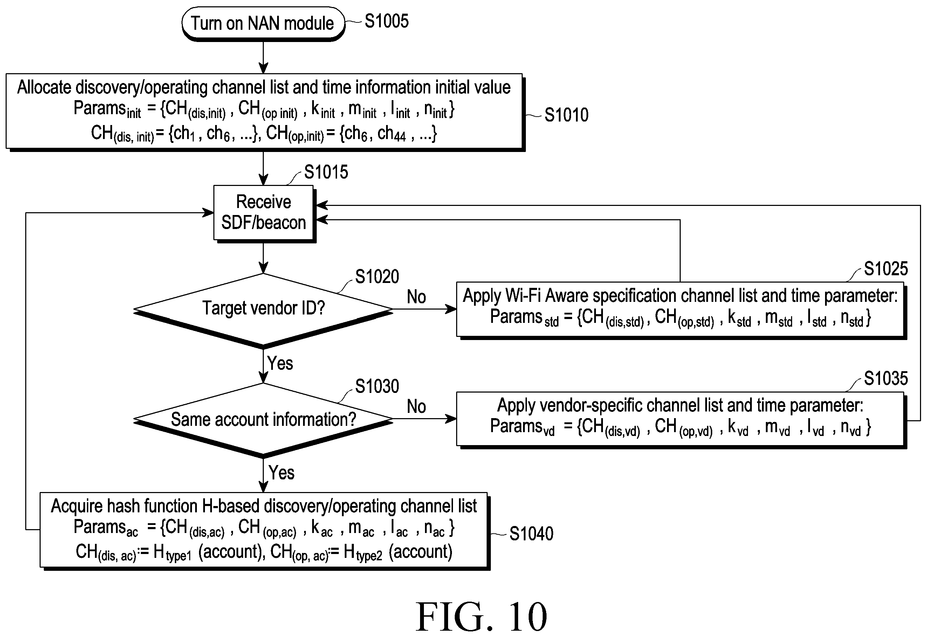

FIG. 10 is a flowchart illustrating a second method of allocating channel information and scheduling information according to priority according to various embodiments of the disclosure. FIG. 10 proposes a method of applying different channels and scheduling information depending on whether or not the same user is identified according to vendor and account information as priority. The electronic device of FIG. 10 may be the electronic device (master node or non-master node) of FIGS. 1 to 9.

Referring to FIG. 10, the electronic device may turn on a NAN module to perform short-range communication with another electronic device (S1005). The electronic device may assign initial values for a discovery/operating channel list and scheduling parameters required when performing NAN (S1010). The scheduling parameters may include scheduling information and channel information of FIGS. 5 to 9. For example, the discovery/operating channel list of scheduling information may include information about channels available as discovery channel information and operating channel information. Initial discovery channel information may be expressed as CH_{(dis, init)}. Initial operating channel information may be expressed as CH_{(op, init)}. The scheduling information may include k, m, l, and n values as size information for the SDP, DW, DW interval, and SDP interval described in FIG. 5. Initial scheduling information may include kᵢₙᵢₜ, mᵢₙᵢₜ, lᵢₙᵢₜ, and nᵢₙᵢₜ values.

After assigning the initial values of the discovery/operating channel list and scheduling parameters, the electronic device may transmit/receive the SDF and the sync beacon to/from at least one other electronic device through the SDP and DW (S1015). The SDF and sync beacon may include service-specific information, SDP or DW timing information, channel information, channel quality information, vendor information, capability information of electronic devices, information on the account (that is, user account) of electronic devices, scheduling information, and NAN capability information.

The electronic device may identify vendor information of another electronic device from the received SDF and sync beacon (S1020). The vendor information may include a vendor identifier (ID) or account information. For example, when another electronic device contains a Samsung account, it may be identified as a target vendor. When it is identified that the identified vendor information is not the target vendor, the electronic device may apply the channel list and scheduling parameter information determined in accordance with the Wi-Fi Aware specification (S1025). The channel list and scheduling parameter information according to the Wi-Fi Aware specification may be conventionally used information or channel list and scheduling parameter information assigned as initial values in operation S1010. The channel list according to the Wi-Fi Aware specification may be expressed as CH_{(dis, std)} and CH_{(op, std)}. The scheduling parameter information according to the Wi-Fi Aware specification may be expressed as k_{std}, m_{std}, l_{std}, and n_{std}.

When the identified vendor information is identified as the target vendor, the electronic device may identify, from the received account information of the electronic device, whether the account information of another electronic device is the same as the account of the electronic device (S1030). When the identified account of the other electronic device is identified to be the same as the account of the electronic device, the channel list determined by a hash function based on the account and the scheduling parameter information based on the account may be applied (S1040). The channel list and scheduling parameter information determined by the hash function based on the account are information that indicates the same user, and thus may include channel list and scheduling information that can be used flexibly in terms of continuity, security, connectivity, and control between electronic devices. The electronic device may calculate the channel list by applying the hash function through the account information. The channel list determined by the hash function based on the account may be expressed as CH_{(dis, ac)}, CH_{(op, ac)}. However, since the channel list is determined by the hash function, scheduling information determined based on the account may be expressed as k_{ac}, m_{ac}, l_{ac}, and n_{ac}. Here, k_{ac}, m_{ac}, l_{ac}, and n_{ac} may be the same as k_{vd}, m_{vd}, l_{vd}, and n_{vd}, which are vendor-specific parameters.

When it is identified that the account of the other electronic device is different from the account of the electronic device, the electronic device may apply vendor-specific channel list and scheduling parameter information (S1035). The vendor-specific channel list and scheduling parameter information may be applied to take advantage of special functions provided only by the corresponding vendor. The vendor-specific channel list may be expressed as CH_{(dis, vd)} and CH_{(op, vd)}. The vendor-specific scheduling parameter information may be expressed as k_{vd}, m_{vd}, l_{vd}, and n_{vd}.

According to an embodiment, the electronic device may pre-store the channel list and scheduling parameter information determined according to Wi-Fi Aware specifications, the channel list and scheduling parameter information determined by a hash function based on the account, and the vendor-specific channel list and scheduling parameter information. Alternatively, the electronic device may transmit/receive the channel list and scheduling parameter information determined according to the Wi-Fi Aware specifications, the channel list and scheduling parameter information determined by a hash function based on the account, and the vendor-specific channel list and scheduling parameter information to/from other electronic devices through the SDF and the sync beacon.

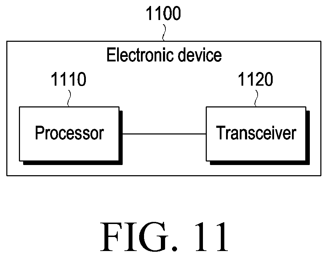

FIG. 11 illustrates the structure of an electronic device according to embodiments of the disclosure. As shown in FIG. 11, the electronic device 1100 of the disclosure may include at least one controller (or a processor) 1110 and a transceiver 1120 including a receiver and a transmitter. The electronic device 1110 may include memory (not shown). The transceiver 1120 and memory may be connected to the at least one processor 1110 to operate under the control of the at least one processor 1110.

The at least one processor 1110 may control operations of the electronic device shown in FIGS. 1 to 10 of the disclosure to be performed. The transceiver 1120 may transmit/receive an SDF, a sync beacon, and data information to/from other electronic devices.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, the respective embodiments of the disclosure may be at least partially combined with each other to operate a base station and a terminal.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. In addition, the embodiments of the disclosure as described above are merely for the sake of illustration, and those skilled in the art will appreciate that various changes and modifications may be made thereto and embodiments within equivalent ranges may be possible. Therefore, the true technical scope of protection of the disclosure should be defined by the appended claims.

## Claims

1. A method performed by a first electronic device in a wireless communication system, the method comprising:
identifying scheduling information;
based on the scheduling information, transmitting a service discovery frame during a first period;
identifying at least one second electronic device;
based on the scheduling information, transmitting a synchronization beacon to the at least one second electronic device during a second period after the first period; and
based on the scheduling information, performing communication with the at least one second electronic device.

2. The method of claim 1, wherein the scheduling information comprises information about the order of states to which the first electronic device is to transition, and
wherein the states to which the first electronic device is to transition comprise a synchronization state, a data transmission/reception state, and a sleep state.

3. The method of claim 1, wherein the service discovery frame comprises:
a publish service discovery frame;
a subscribe service discovery frame; and
a service discovery frame follow-up, and
wherein the service discovery frame follow-up comprises at least one of service-specific information of an electronic device, SDP or DW timing information, channel information, channel quality information, vendor information, capability information of the electronic device, account information of the electronic device, scheduling information, and NAN capability information.

4. The method of claim 1, wherein the synchronization beacon comprises at least one of service-specific information of an electronic device, SDP or DW timing information, channel information, channel quality information, vendor information, capability information of the electronic device, account information of the electronic device, scheduling information, and NAN capability information.

5. The method of claim 1, wherein the first period is a service discovery period,
wherein the second period is a discovery window or a synchronization period,
wherein the scheduling information comprises information about the size of the first period and the size of the second period, and
wherein the second period is configured to be less than 512 time units (TUs).

6. A first electronic device in a wireless communication system, the first electronic device comprising:
a transceiver; and
at least one processor electrically connected to the transceiver,
wherein the at least one processor is configured to:
identify scheduling information;
based on the scheduling information, transmit a service discovery frame during a first period;
identify at least one second electronic device;
based on the scheduling information, transmit a synchronization beacon to the at least one second electronic device during a second period after the first period; and
based on the scheduling information, perform communication with the at least one second electronic device.

7. The first electronic device of claim 6, wherein the scheduling information comprises information about the order of states to which the first electronic device is to transition, and
wherein the states to which the first electronic device is to transition comprise a synchronization state, a data transmission/reception state, and a sleep state.

8. The first electronic device of claim 6, wherein the service discovery frame comprises:
a publish service discovery frame;
a subscribe service discovery frame; and
a service discovery frame follow-up, and
wherein the service discovery frame follow-up comprises at least one of service-specific information of an electronic device, SDP or DW timing information, channel information, channel quality information, vendor information, capability information of the electronic device, account information of the electronic device, scheduling information, and NAN capability information.

9. The first electronic device of claim 6, wherein the synchronization beacon comprises at least one of service-specific information of an electronic device, SDP or DW timing information, channel information, channel quality information, vendor information, capability information of the electronic device, account information of the electronic device, scheduling information, and NAN capability information.

10. The first electronic device of claim 6, wherein the first period is a service discovery period,
wherein the second period is a discovery window or a synchronization period,
wherein the scheduling information comprises information about the size of the first period and the size of the second period, and
wherein the second period is configured to be less than 512 time units (TUs).
